# EUROPÄISCHE PATENTSCHRIFT

(11) **EP 3 721 089 B1**
(45) Veröffentlichungstag und Bekanntmachung des Hinweises auf die Patenterteilung: **06.10.2021**
(21) Anmeldenummer: 18833172.2
(22) Anmeldetag: 03.12.2018
(51) Int. Cl.: F04B 39/10, F16K 15/16, F16K 15/14

(54) **LAMELLENAUSLASSVENTIL**
LAMELLAR DISCHARGE VALVE
SOUPAPE D'ÉCHAPPEMENT À LAMELLE

(30) Priorität: 06.12.2017 DE 102017222095
(43) Veröffentlichungstag der Anmeldung: 14.10.2020
(73) Patentinhaber: KNORR-BREMSE Systeme für Nutzfahrzeuge GmbH, 80809 München (DE)
(72) Erfinder: MELLAR, Jörg, 85560 Ebersberg (DE); VERON, Frederic, 14130 Fiervielle - Les Parcs (FR)
(86) Internationale Anmeldenummer: PCT/EP2018/083310
(87) Internationale Veröffentlichungsnummer: WO 2019/110488

(56) Entgegenhaltungen:
- DE-A1- 1 956 259
- US-A- 1 667 143
- US-A- 2 195 292
- US-A- 2 752 943
- US-B1- 6 796 331

## Beschreibung

Die Erfindung betrifft ein Lamellenauslassventil, insbesondere ein Lamellenauslassventil zum Verschließen und Öffnen einer Auslassöffnung in einem Gehäuse eines Kompressionszylinders eines Kompressors.

Kompressoren werden beispielsweise in Bremsanlagen von Bussen oder Lastkraftwagen verwendet. Solche Kompressoren weisen einen oder mehrere Kompressionszylinder auf und sind direkt an dem Motor des Fahrzeugs angebracht. Häufig werden Hubkolbenkompressoren verwendet, die einen Arbeitszyklus mit einem Ansaugen, einem Verdichten und einem Ausstoßen von Luft aufweisen. Im Betrieb des Kompressors wird einerseits aufgrund einer Kompressionsarbeit und andererseits aufgrund von mechanischen Verlusten, wie beispielsweise einem Versatz des Kolbens, einer Reibung der Kolbenringe oder einer Bewegung eines Lamellenventils, über den Fahrzeugmotor Energie verbraucht. Heutzutage ist jedoch Energieeinsparung eine hauptsächliche Herausforderung.

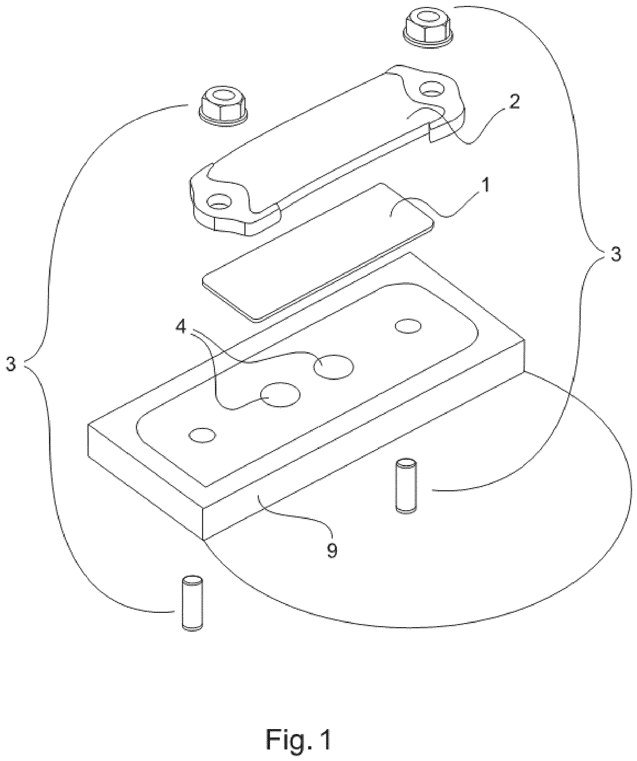

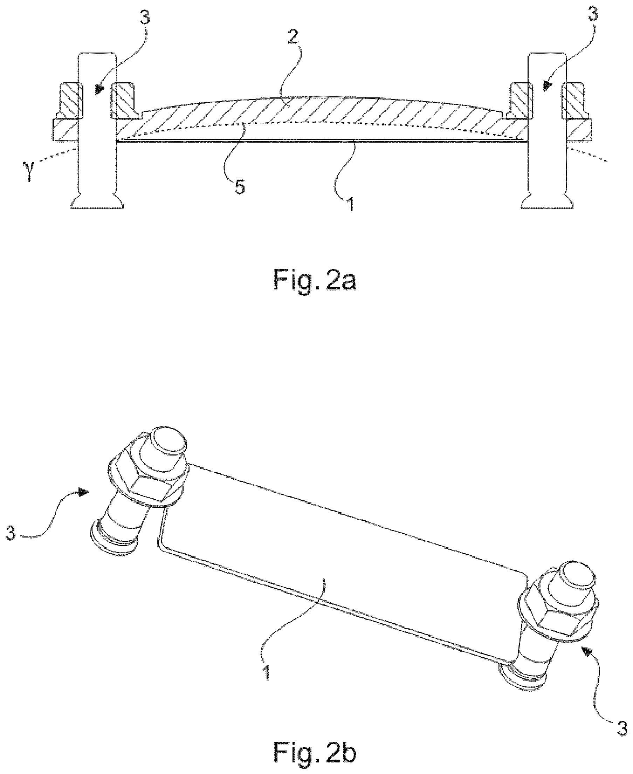

Im Stand der Technik, beispielsweise im Dokument DE1956259A1, sind Lamellenauslassventile bekannt, die, wie in **Fig. 1****,** **Fig. 2a** und **Fig. 2b** gezeigt, aus einer Lamelle 1, die Auslassöffnungen 4 eines Kompressionszylinders in einem Gehäuse 9 des Kompressionszylinders verschließt und öffnet, aus einer Brücke 2, die eine Verformung der Lamelle 1 in einem geöffneten Zustand der Auslassöffnungen 4 einschränkt, und aus Befestigungselementen 3 bestehen. Wenn ein Kolben in dem Kompressionszylinder nach unten geht, blockiert das Lamellenauslassventil die Auslassöffnungen 4, um zu verhindern, dass bereits ausgestoßene, unter Druck stehende, Luft wieder in den Kompressionszylinder zurückströmt. Wenn der Kolben nach oben geht, wird die Lamelle 1 durch den Luftstrom von der Auslassöffnung weggebogen, um Luft in einen Auslasskanal ausströmen zu lassen. Der maximale Krümmungsradius der weggebogenen Lamelle 1, die sich an der Brücke 2 abstützt, ist in Fig. 2a mit γ angegeben. Wie oben angegeben, wird ein Teil der Energie der verdichteten Luft dazu verwendet, die Lamelle 1 zu biegen.

Von dem Gehäuse 9 des Kompressionszylinders ist hier eine Ventilplatte dargestellt, die an einem Zylinderblock angebracht ist. Alternativ ist aber nicht zwingend eine separate Ventilplatte erforderlich und die Funktion der separaten Ventilplatte kann von einem in dem Gehäuse 9 des Kompressionszylinders integrierten Abschnitt ausgeübt werden.

Eine Größe der Kompressoren und damit auch ein Bauraum im Bereich der Auslassventile sind von dem Anwendungsgebiet der Kompressoren abhängig. Dadurch ergeben sich Lamellenauslassventile in verschiedenen Größen, was zur Folge hat, dass es die einzelnen Bauteile der Lamellenauslassventile in unterschiedlichen Varianten gibt, was aufgrund jeweils geringerer Stückzahlen und einem größeren Aufwand in der Lagerhaltung zu Mehrkosten führt.

Der Erfindung liegt die Aufgabe zugrunde, ein Lamellenauslassventil bereitzustellen, das eine Anzahl von Varianten von Bauteilen des Lamellenauslassventils verringert.

Die Aufgabe wird durch ein Lamellenauslassventil gemäß Anspruch 1 gelöst. Vorteilhafte Weiterentwicklungen sind Gegenstand der abhängigen Ansprüche.

Durch einen Aufbau eines Lamellenauslassventils mit zwei Brückenelementen einer Brücke mit jeweils einer Abstützfläche, die einer Lamelle zugewandt ist, zum Einschränken einer maximalen Verformung der Lamelle in einem geöffneten Zustand einer Auslassöffnung können dieselben Brückenelemente mit Lamellen mit unterschiedlichen Längen kombiniert werden, um unterschiedliche Lamellenauslassventile auszubilden. Dadurch wird eine Teilevielfalt für unterschiedliche Lamellenauslassventile verringert.

Vorteilhafterweise weisen die Brückenelemente jeweils einen zu einem Gehäuse eines Kompressionszylinders vorstehenden Zentrierstift auf, um jeweils zusammen mit einem Befestigungselement eine Position der Brückenelemente genau festzulegen und sicherzustellen.

In einer vorteilhaften Ausbildung der Abstützfläche weist sie eine ebene Form auf. Die ebene Form der Abstützfläche ist einfach und kostengünstig herzustellen.

In einer alternativen vorteilhaften Ausbildung der Abstützfläche weist sie eine gekrümmte Form auf. Dadurch ist eine stetige Krümmung der durch einen Luftstrom von der Auslassöffnung weggebogenen Lamelle möglich, so dass am Rand der Abstützfläche keine Spannungsspitzen auftreten, was eine Lebensdauer der Lamelle verringern würde.

Wenn die Lamelle vorteilhafterweise entlang der Längsrichtung eine unterschiedliche Breite aufweist, können einerseits Enden der Lamelle mit einer vorbestimmten Breite ausgeführt werden, um eine wirksame Fläche zum Abstützen zu bestimmen und somit einen Verschleiß der Lamelle zu verringern, andererseits wird die Breite in einem mittleren Bereich der Lamelle in der Längsrichtung entsprechend eines gewünschten Widerstands gegen ein Verbiegen gewählt.

Vorteilhafterweise ist die Breite in dem mittleren Bereich geringer als an den Enden. Dann ist der Widerstand der Lamelle gegen ein Verbiegen bei einer ausreichenden Verschleißfestigkeit der Enden geringer, was zu einem geringeren Druckverlust und somit zu einer Energieeinsparung führt.

Bei einem Eingreifen von Eingriffsabschnitten in Öffnungen der Lamelle und einer vorteilhaften Ausbildung der Öffnungen mit in der Längsrichtung der Lamelle parallele gegenüberliegenden Seiten wird eine Führungseinrichtung gebildet, und eine Bewegung der Lamelle in der Längsrichtung bei einem Verbiegen der Lamelle kann ohne zusätzliche Bauelemente geführt werden, so dass die Herstellkosten nicht ansteigen.

Bei einem vorteilhaften Vorsehen einer zu dem Gehäuse des Kompressionszylinders vorstehenden Anschlagfläche für eine Stirnseite in der Längsrichtung der Lamelle kann die Bewegung der Lamelle in der Längsrichtung begrenzt werden und eine vorbestimmte Position der Lamelle kann während eines Betriebs eingehalten werden.

Wenn die Größe der Öffnungen in Richtung des mittleren Bereichs der Lamelle und die Brückenelemente, nämlich eine Größe und Position der Brückenelemente, so abgestimmt sind, dass ein Freiraum oberhalb eines Teils der Öffnungen vorhanden ist, kann Luft aus den Auslassöffnungen, zusätzlich zu seitlichen Ausströmflächen zwischen der Lamelle und dem Gehäuse, durch die Öffnungen in der Lamelle an den Brückenelemente vorbei ausströmen.

Bei einem vorteilhaften Vorsehen eines separat anbringbaren Anschlags, der so angeordnet ist, dass er die maximale Verformung in dem mittleren Bereich der Lamelle einschränkt, kann die maximale Verformung im Bedarfsfall durch den Anschlag eingeschränkt werden, ohne dass andere Brückenelemente verwendet werden müssen.

Die Erfindung wird nun anhand von Ausführungsbeispielen unter Bezugnahme auf die beigefügten Zeichnungen erläutert.

Insbesondere zeigt
- Fig. 1: eine Explosionsdarstellung eines Lamellenauslassventils gemäß dem Stand der Technik;
- Fig. 2a: eine seitliche Schnittansicht des Lamellenauslassventils gemäß dem Stand der Technik;
- Fig. 2b: eine isometrische Ansicht des Lamellenauslassventils gemäß dem Stand der Technik ohne Darstellung einer Brücke;
- Fig. 3: eine Seitenansicht eines Lamellenauslassventils gemäß einer Ausführungsform der Erfindung;
- Fig. 3a: einen vergrößerten Ausschnitt des Lamellenauslassventils von Fig. 3 in einer Schnittdarstellung;
- Fig. 4: eine Draufsicht auf eine erfindungsgemäße Lamelle;
- Fig. 5: eine Draufsicht auf eine alternative erfindungsgemäße Lamelle;
- Fig. 6: eine Ansicht eines Brückenelements von schräg unten;
- Fig. 7: eine Ansicht des Brückenelements von schräg oben;
- Fig. 8: eine isometrische Ansicht des Lamellenauslassventils mit Freiräumen über Öffnungen; und
- Fig. 9: eine Seitenansicht des Lamellenauslassventils mit einem separat befestigbaren Anschlag.

Räumliche Angaben, wie oben, unten, seitlich oder ähnliche, beziehen sich auf eine Beschreibung eines Auslasslamellenventils das, wie in den Figuren dargestellt, oberhalb eines Kompressionszylinders angeordnet ist, und dessen Lamelle sich, wie ebenfalls in den Figuren dargestellt, nach oben bewegt. Diese Angaben sind aber nicht beschränkend.

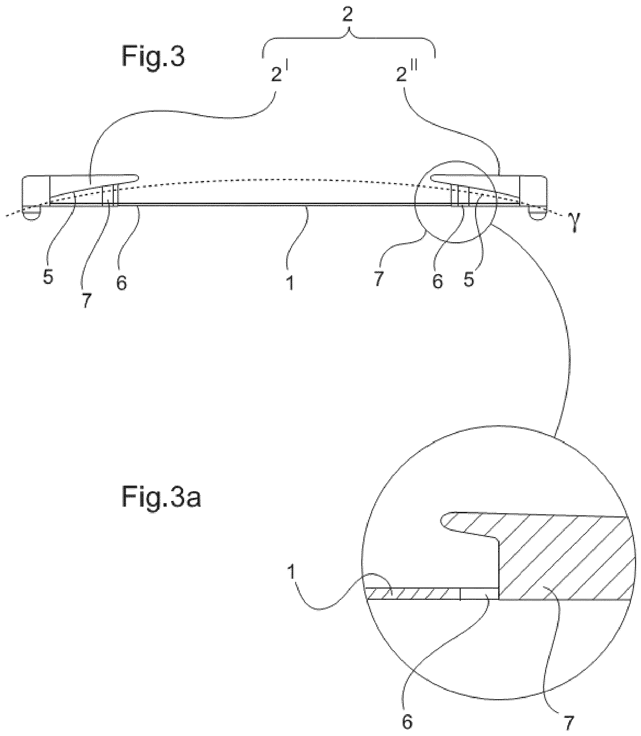

Fig. 3 zeigt eine Seitenansicht eines Lamellenauslassventils gemäß einer Ausführungsform der Erfindung. Das Lamellenauslassventil ist vorgesehen, Auslassöffnungen 4 (Fig. 1) in einem Gehäuse 9 (Fig. 1) eines Kompressionszylinders eines Kompressors zu verschließen und zu öffnen.

Die Ausführungsform des Auslasslamellenventils gemäß Fig. 3 weist, wie der Stand der Technik gemäß den Figuren 1, 2a und 2b, ebenfalls eine Lamelle 1 zum Verschließen und Öffnen einer hier nicht gezeigten Auslassöffnung 4 (Fig. 1) auf. Es kann eine einzelne Auslassöffnung vorgesehen sein oder alternativ mehrere Auslassöffnungen, wobei eine gesamte Querschnittsfläche der Auslassöffnungen möglichst groß gewählt ist, um einen Druckabfall beim Ausstoßen der Luft zu minimieren.

Das Auslasslamellenventil weist ferner eine Brücke 2 auf, um eine maximale Verformung der Lamelle 1 einzuschränken. Die Lamelle 1 wird durch einen Luftstrom durch die unterhalb der Lamelle 1 angeordneten Auslassöffnungen 4 (Fig. 1) nach oben gebogen, bis sie in einem maximal geöffneten Zustand der Auslassöffnungen 4 (Fig. 1) an einer der Lamelle 1 zugewandten Abstützfläche 5 der Brücke 2 anliegt.

Die Brücke 2 besteht aus zwei Brückenelemente 2', 2". Die Brückenelemente 2', 2" haben jeweils eine der Lamelle 1 zugewandte Abstützfläche 5 mit einer vorbestimmten Form zum Einschränken der maximalen Verformung der Lamelle 1 in dem geöffneten Zustand der Auslassöffnungen 4 (Fig. 1). Die maximale Verformung der Lamelle 1 ergibt einen Krümmungsradius γ, der im Wesentlichen identisch zu dem in Fig. 2a gezeigten Krümmungsradius y ist, so dass einerseits eine möglichst große Auslassfläche zwischen dem Gehäuse 9 (Fig. 1) und der Lamelle 1 realisiert wird, andererseits aber eine Lebensdauer bei einem zu großen Hub und dadurch einem geringen Krümmungsradius durch eine Vergrößerung von Biegespannungen nicht verringert wird.

Wie in Fig. 1 anhand der Brücke 2 gezeigt, weisen auch die erfindungsgemäßen Brückenelemente 2', 2" Befestigungselemente 3 (Fig. 1) zum Befestigen der Brückenelemente 2', 2" an dem Gehäuse 9 auf.

Wie in **Fig. 3a** gezeigt ist, weist die Lamelle 1 Öffnungen 6 auf, in die jeweils ein Eingriffsabschnitt 7 der Brückenelemente 2', 2" eingreift.

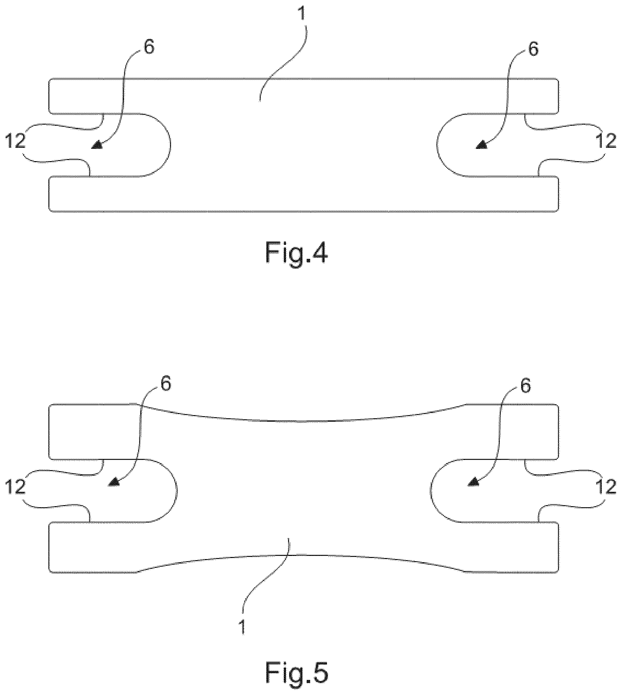

**Fig. 4** zeigt eine Draufsicht auf die erfindungsgemäße Lamelle 1. Die Lamelle 1 hat eine längliche Form mit einer Längsrichtung, also eine Form, bei der eine Abmessung in einer ersten Richtung gegenüber einer Abmessung in einer zweiten Richtung senkrecht zu der ersten Richtung wesentlich geringer ist. Die Öffnungen 6 sind im Bereich von Enden in der Längsrichtung, also der Richtung mit der großen Abmessung angeordnet und sind zu den Enden offen.

**Fig. 5** zeigt eine Draufsicht auf eine alternative erfindungsgemäße Lamelle 1. Diese Lamelle 1 weist, im Gegensatz zu der in Fig. 4 gezeigten Lamelle, eine unterschiedliche Breite entlang der Längsrichtung auf. Hier ist die Breite in einem mittleren Bereich der Lamelle 1 geringer als an den Enden. In einer alternativen Ausführungsform kann die Breite in Abhängigkeit von den spezifischen Anforderungen in dem mittleren Bereich auch größer als an den Enden sein.

Fig. 4 und Fig. 5 zeigen, dass die Öffnungen 6 in der Längsrichtung der Lamelle 1 parallele gegenüberliegende Seiten 12 aufweisen, wobei die Öffnungen 6 in Richtung des mittleren Bereichs der Lamelle 1 eine vorbestimmte Größe (Länge) aufweisen. Die Seiten 12 sind jedoch nicht zwingend parallel gegenüberliegend, sondern können beispielsweise auch leicht schräg zueinander angeordnet sein.

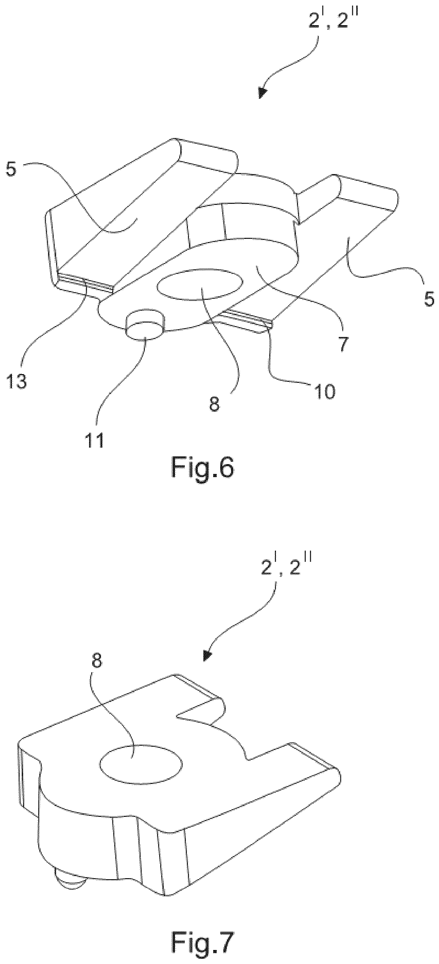

**Fig. 6** und **Fig. 7** zeigen jeweils eines der Brückenelemente 2', 2". Fig. 6 zeigt eine Ansicht von schräg unten und Fig. 7 zeigt eine Ansicht von schräg oben.

In Fig. 6 sind der Eingriffsabschnitt 7 und die Abstützflächen 5 gezeigt. Ferner ist ein optionaler Zentrierstift 11 dargestellt.

Der Eingriffsabschnitt 7 und die Seiten 12 (Fig. 6, Fig. 7) der Öffnungen 6 sind so aufeinander abgestimmt, dass sie eine Führungseinrichtung in der Längsrichtung der Lamelle 1 bilden, so dass sich die Enden der Lamelle 1 bei einem Nach-oben-biegen des mittleren Bereichs der Lamelle 1 entlang der Führungseinrichtung bewegen können und die Lamelle 1 bei einer Rückbewegung in ihre ursprüngliche Position anschließend wieder eine Stellung einnimmt, in der die Auslassöffnungen sicher verschlossen werden.

Der Zentrierstift 11 steht in einem in dem Gehäuse 9 eingebauten Zustand des Brückenelements 2', 2" zu dem Gehäuse 9 vor und ist in einer nicht gezeigten Zentrierbohrung aufgenommen.

Die Abstützflächen 5 haben eine ebene Form. Alternativ können die Abstützflächen 5 auch entlang der Längsrichtung der Lamelle 1 eine gekrümmte Form aufweisen, so dass sie der Biegelinie der Lamelle 1 bei ihrer maximalen Verformung entsprechen. Alternativ können auch andere geeignete Krümmungen gewählt sein.

In Fig. 6 ist ferner eine im montierten Zustand zu dem Gehäuse 9 (Fig. 1) vorstehende Anschlagfläche 10 gezeigt. Die Anschlagfläche 10 wird hier durch einen Absatz gebildet, der am Ende jeder Abstützfläche 5 vorgesehen ist. Die Anschlagfläche 10 verhindert, dass sich die Lamelle 1 in ihrer Längsrichtung aus einer vorbestimmten Position bewegt, indem eine Stirnseite der Lamelle 1 in der Längsrichtung an der Anschlagfläche 10 anstößt. Die Anschlagfläche 10 ist aber nicht zwingend als ein Absatz ausgebildet, sondern kann alternativ auch beispielsweise durch einen Stift, der in der Abstützfläche 5 vorgesehen ist, realisiert sein. Auch ist es nicht erforderlich, dass die Anschlagfläche 10 an jeder Abstützfläche 5 vorgesehen ist. Alternativ kann nur eine Anschlagfläche 10 für jede Richtung in der Längsrichtung des Lamelle 1 vorgesehen sein, solange sichergestellt ist, dass eine Bewegung der Lamelle 1 in der Längsrichtung begrenzt wird.

In Fig. 6 und Fig. 7 ist ferner ein Durchgangsloch 8 für die Befestigungselemente 3 (Fig. 1), um die Brückenelemente 2', 2" an dem Gehäuse 9 zu befestigen, dargestellt.

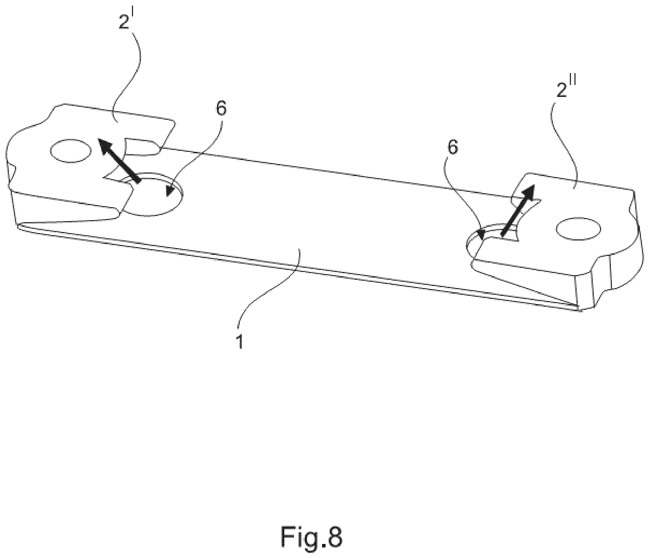

**Fig. 8** zeigt eine isometrische Ansicht des Lamellenauslassventils mit Freiräumen über den Öffnungen 6. Die Freiräume werden dadurch gebildet, dass ein Raum oberhalb zumindest eines Teils der Öffnungen 6 freigehalten ist, also nicht durch das Brückenelement 2', 2", oder ein sonstiges Bauteil, eingenommen wird. Dadurch ist es möglich, dass, in einem geöffneten Zustand des Auslassventils, wie durch die Pfeile in Fig. 6 gezeigt, Luft durch zumindest einen Teil der Öffnungen 6 ungehindert in den Freiraum abströmen kann. Die vorbestimmte Größe der Öffnungen 6 in Richtung des mittleren Bereichs der Lamelle 1 und die Brückenelemente 2', 2" sind also so abgestimmt, dass die Freiräume oberhalb eines Teils der Öffnungen 6 gebildet werden.

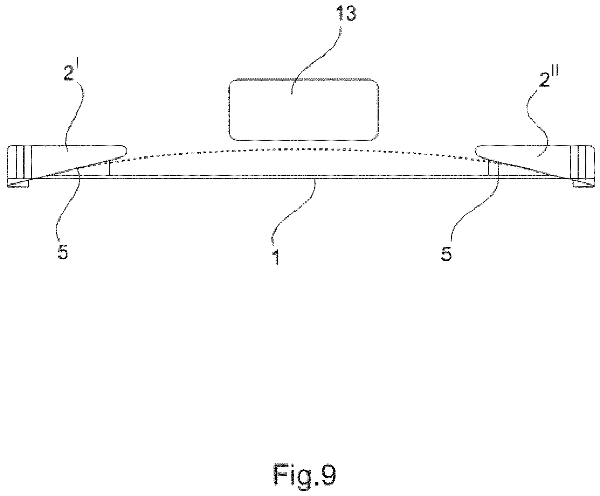

In **Fig. 9** ist eine Seitenansicht des Lamellenauslassventils mit einem optionalen separat befestigbaren oder integrierten Anschlag 13 gezeigt. Der separate Anschlag 13 ist in dem mittleren Bereich der Lamelle 1 oberhalb davon angeordnet und schränkt, zusätzlich zu den Abstützflächen 5 der Brückenelemente 2', 2", die maximale Verformung der Lamelle 1, die in Fig. 9 durch eine gestrichelte Linie angedeutet ist (Krümmungsradius γ), ein. Der Anschlag 13 kann an dem Gehäuse 9 des Kompressionszylinders, beispielsweise der Ventilplatte, einer Abdeckung des Gehäuses 9 oder auch an einem der oder beiden Brückenelemente/n 2', 2" befestigt oder darin integriert sein.

### BEZUGSZEICHENLISTE

- 1: Lamelle
- 2: Brücke
- 2', 2": Brückenelement
- 3: Befestigungselement
- 4: Auslassöffnung
- 5: Abstützfläche
- 6: Öffnung
- 7: Eingriffsabschnitt
- 8: Durchgangsloch
- 9: Gehäuse
- 10: Anschlagfläche
- 11: Zentrierstift
- 12: Seite
- 13: Anschlag

## Patentansprüche

1. Lamellenauslassventil für eine Auslassöffnung (4) in einem Gehäuse (9) eines Kompressionszylinders eines Kompressors, aufweisend
eine Lamelle (1) zum Verschließen und Öffnen der Auslassöffnung (4), wobei die Lamelle (1) eine längliche Form hat, und
eine Brücke (2) zum Einschränken einer maximalen Verformung der Lamelle (1) in einem geöffneten Zustand der Auslassöffnung (4),
**dadurch gekennzeichnet, dass**
im Bereich der Enden der Lamelle (1) in einer Längsrichtung zu den Enden offene Öffnungen (6) vorgesehen sind,
die Brücke (2) aus zwei Brückenelementen (2', 2") besteht, und die Brückenelemente (2', 2")
jeweils einen dem Gehäuse (9) zugewandten Eingriffsabschnitt (7) aufweisen, der mit den Öffnungen (6) im Eingriff ist, und
jeweils eine der Lamelle (1) zugewandte Abstützfläche (5) mit einer vorbestimmten Form zum Einschränken der maximalen Verformung der Lamelle (1) in dem geöffneten Zustand der Auslassöffnung (4) aufweisen.

2. Lamellenauslassventil gemäß Anspruch 1, wobei Befestigungselemente (3) zum Befestigen der Brückenelemente (2', 2") vorgesehen sind, und die Brückenelemente (2', 2") einen zu dem Gehäuse (9) vorstehenden Zentrierstift (11) aufweisen.

3. Lamellenauslassventil gemäß einem der Ansprüche 1 oder 2, wobei die Abstützfläche (5) eine ebene Form aufweist.

4. Lamellenauslassventil gemäß einem der Ansprüche 1 oder 2, wobei
die Abstützfläche (5) eine entlang der Längsrichtung der Lamelle (1) gekrümmte Form aufweist.

5. Lamellenauslassventil gemäß einem der vorangehenden Ansprüche, wobei die Lamelle (1) entlang ihrer Längsrichtung eine unterschiedliche Breite aufweist.

6. Lamellenauslassventil gemäß Anspruch 5, wobei
die Breite in einem mittleren Bereich geringer als an den Enden ist.

7. Lamellenauslassventil gemäß einem der vorangehenden Ansprüche, wobei
die Öffnungen (6) in der Längsrichtung der Lamelle (1) verlaufende parallele gegenüberliegende Seiten (12) aufweisen und der Eingriffsabschnitt (7) und die Seiten (12) ausgebildet sind, eine Führungseinrichtung in der Längsrichtung der Lamelle (1) zu bilden.

8. Lamellenauslassventil gemäß einem der vorangehenden Ansprüche, wobei
die Brückenelemente (2', 2") jeweils eine zu dem Gehäuse (9) vorstehende Anschlagfläche (10) für eine Stirnseite in der Längsrichtung der Lamelle (1) aufweisen.

9. Lamellenauslassventil gemäß einem der vorangehenden Ansprüche, wobei
eine vorbestimme Größe der Öffnungen (6) in Richtung des mittleren Bereichs der Lamelle (1) und die Brückenelemente (2', 2") so abgestimmt sind, dass ein Freiraum oberhalb eines Teils der Öffnungen (6) ausgebildet ist.

10. Lamellenauslassventil gemäß einem der vorangehenden Ansprüche, wobei
ein separat anbringbarer Anschlag (13) vorgesehen ist, der so angeordnet ist, dass er die maximale Verformung in dem mittleren Bereich der Lamelle (1) einschränkt.

## Claims

1. Lamellar outlet valve for an outlet opening (4) in a housing (9) of a compression cylinder of a compressor, comprising
a lamella (1) for closing and opening the outlet opening (4), wherein the lamella (1) is of elongate form, and
a bridge (2) for limiting a maximum deformation of the lamella (1) in an open state of the outlet opening (4),
**characterized in that**
in the region of the ends of the lamella (1) in a longitudinal direction, openings (6) which are open towards the ends are provided,
the bridge (2) is composed of two bridge elements (2', 2"), and the bridge elements (2', 2")
each comprise an engagement portion (7) which faces towards the housing (9) and is in engagement with the openings (6), and
each comprise a support surface (5) which faces towards the lamella (1) and has a predetermined form for limiting the maximum deformation of the lamella (1) in the open state of the outlet opening (4).

2. Lamellar outlet valve according to Claim 1, wherein
fastening elements (3) for the fastening of the bridge elements (2', 2") are provided, and the bridge elements (2', 2") comprise a centring pin (11) which projects towards the housing (9).

3. Lamellar outlet valve according to either of Claims 1 and 2, wherein
the support surface (5) is of planar form.

4. Lamellar outlet valve according to either of Claims 1 and 2, wherein
the support surface (5) is of curved form along the longitudinal direction of the lamella (1).

5. Lamellar outlet valve according to one of the preceding claims, wherein
the lamella (1) has a varying width along the longitudinal direction thereof.

6. Lamellar outlet valve according to Claim 5, wherein
the width in a middle region is smaller than at the ends.

7. Lamellar outlet valve according to one of the preceding claims, wherein
the openings (6) comprise parallel, opposite sides (12) which extend in the longitudinal direction of the lamella (1), and the engagement portion (7) and the sides (12) are configured to form a guide device in the longitudinal direction of the lamella (1).

8. Lamellar outlet valve according to one of the preceding claims, wherein
the bridge elements (2', 2") each comprise a stop surface (10) for an end side in the longitudinal direction of the lamella (1), said stop surface projecting towards the housing (9).

9. Lamellar outlet valve according to one of the preceding claims, wherein
a predetermined size of the openings (6), in the direction of the middle region of the lamella (1), and the bridge elements (2', 2") are coordinated such that a free space is configured above a part of the openings (6) .

10. Lamellar outlet valve according to one of the preceding claims, wherein
a stop (13) which can be attached separately is provided, which is arranged such that it limits the maximum deformation in the middle region of the lamella (1).

## Revendications

1. Soupape d'échappement à lamelle pour une ouverture (4) d'échappement d'une enveloppe (9) d'un cylindre de compression d'un compresseur, comportant
une lamelle (1) de fermeture et d'ouverture de l'ouverture (4) d'échappement, la lamelle (1) ayant une forme oblongue, et un pontet de limitation d'une déformation maximum de la lamelle (1) dans un état ouvert de l'ouverture (4) d'échappement,
**caractérisée en ce que**
dans la partie des extrémités de la lamelle (1) sont prévues des ouvertures ouvertes vers les extrémités dans une direction longitudinale,
le pontet (2) est constitué de deux éléments (2', 2") de pontet, et les éléments (2'2'') de pontet ont chacun une partie (7) de pénétration, qui est tournée vers l'enveloppe (9) et qui est en prise avec les ouvertures (6) et,
ont, respectivement une surface (5) d'appui, tournée vers la lamelle (1) et ayant une forme déterminée à l'avance pour limiter la déformation maximum de la lamelle (1) dans l'état ouvert de l'ouverture (4) d'échappement.

2. Soupape d'échappement à lamelle suivant la revendication 1, dans laquelle
il est prévu des éléments (3) de fixation pour la fixation des éléments (2'2") de pontet et les éléments (2'2") de pontet ont une broche (11) de centrage en saillie vers l'enveloppe (9).

3. Soupape d'échappement à lamelle suivant l'une des revendications 1 ou 2, dans laquelle
la surface (5) d'appui a une forme plane.

4. Soupape d'échappement à lamelle suivant l'une des revendications 1 et 2, dans laquelle
la surface (5) d'appui a une forme incurvée suivant la direction longitudinal de la lamelle (1).

5. Soupape d'échappement à lamelle suivant l'une des revendications précédentes, dans laquelle
la lamelle a une largeur différente suivant sa direction longitudinale.

6. Soupape d'échappement à lamelle suivant la revendication 5, dans laquelle
la largeur dans une partie médiane est plus petite qu'aux extrémités.

7. Soupape d'échappement à lamelle suivant l'une des revendications précédentes, dans laquelle
les ouvertures (6) ont des côtés (12) opposés parallèles s'étendant dans la direction longitudinale de la lamelle (1) et la partie (7) de pénétration dont les côtés (12) sont constitués pour former un dispositif de guidage dans la direction longitudinale de la lamelle (1).

8. Soupape d'échappement à lamelle suivant l'une des revendications précédentes, dans laquelle
les éléments (2'2") de pontet ont chacun une surface (10) de butée, en saillie vers l'enveloppe (9), pour un côté frontal dans la direction longitudinale de la lamelle (1).

9. Soupape d'échappement à lamelle suivant l'une des revendications précédentes, dans laquelle
une dimension déterminée à l'avance des ouvertures (6) dans la direction de la partie médiane de la lamelle (1) et les éléments (2'2") du pontet sont adaptés de manière à constituer un espace libre au-dessus d'une partie des ouvertures (6).

10. Soupape d'échappement à lamelle suivant l'une des revendications précédentes, dans laquelle il est prévu une butée (13), qui peut être montée séparément et qui est disposée de manière à limiter la déformation maximale dans la partie médiane de la lamelle (1).
